# EUROPEAN PATENT APPLICATION

(11) **EP 4 693 424 A1**
(43) Date of publication of application: **11.02.2026**
(21) Application number: 24386095.4
(22) Date of filing: 09.08.2024
(51) Int. Cl.: H01M 4/04, H01M 4/1393, H01M 4/587, H01M 4/62, H01M 4/66, H01M 4/02

(54) **METHOD OF PROVIDING AN ELECTRODE**

(71) Applicant: Pleione Energy S.A., 15310 Athens (GR); Fraunhofer Institute for Silicate Research ISC, 97082 Wurzburg (DE)
(72) Inventor: Gronbach, Andreas, 97082 Wurzburg (DE); Daubinger, Philip, 97082 Wurzburg (DE); Vavouliotis, Antonios, 15310 Athens (GR); Masouras, Athanasios, 15310 Athens (GR); Hoxha, Dorela, 15310 Athens (GR); Kalogridi, Zampia, 15310 Athens (GR)
(74) Representative: D Young & Co LLP

(57) **Abstract**

There is provided a method of providing an anode electrode comprise: providing a solution comprising: an active material; a solvent wherein the solvent is water; a conductivity-enhancing additive; and, at least one water soluble polymer; providing a collector; at least partially covering the collector in the solution; and, forming an electrode from the at least partially covered collector.

## Description

### Technical Field

The present disclosure relates to the development and production of electrodes, with a semi-industrialized roll-to-roll process. In a part of the disclosure, the electrodes are anodic graphene-based. In a part of the disclosure, the production of electrodes uses aqueous binders.

### Background

Demand for high performance rechargeable batteries is increasing. Rechargeable batteries are desirable as being more environmentally friendly than their non-rechargeable counterparts. The number of applications using rechargeable batteries is increasing and therefore improvements in this area are advantageous.

Today, the main battery systems are the rechargeable lead acid battery and the primary manganese-zinc dioxide battery. Both have a long history and are at an advanced stage of technical maturity. Modern batteries often use lithium (Li)-based battery technologies. Lithium has a low atomic number and high electrode potential, resulting in significantly high energy density for lithium-ion batteries (LIBs) compared to lead and zinc in traditional batteries.

H. Ikeda of Sanyo patented an organic solvent with adsorption material such as graphite in June 1981, Japanese Patent No. 1769661. A year before Ikeda's patent on graphite, Goodenough filed a patent on LiCoO2 for a cathode material. S. Basu of Bell Laboratories filed US 4,423,125, in 1982, based on his research on lithium in graphite at room temperature, having previously found lithium adsorption on graphite in dissolved salt electrolytes at high temperatures, US 4,304,8259. I. Kuribayashi and A. Yoshino developed a new cell using a carbon anode and a LiCoO2 cathode and filed patents. Until, about 30 years ago, Sony Co., using a pilot plant developed for LiMnO2 rechargeable cells, (Sony Energytec Inc.) commercialized the world's first lithium-ion battery.

Battery developments typically focus on two aspects, size and weight of the battery and electrical power of the battery. Smaller batteries with high power output and lifetime are desirable. Less often considered are the processes by which the batteries are created.

Disclosed herein are improvements to batteries that are highly effective and highly environmentally friendly.

### Summary

Aspects of the disclosure are defined in the accompanying claims.

In accordance with some embodiments described herein, there is provided a method of providing an anode electrode comprising: providing a solution comprising: an active material; a solvent wherein the solvent is water; a conductivity-enhancing additive; and, at least one water soluble polymer; providing a collector; at least partially covering the collector in the solution; and, forming an electrode from the at least partially covered collector.

In some examples, the water is substantially deionised water.

In some examples, the active material comprises at least one of graphene and graphite.

In some examples, the collector is at least partially formed of a metallic material.

In some examples, the collector is at least partially formed of copper.

In some examples, the conductivity-enhancing additive comprises carbon black.

In some examples, the at least one water-soluble polymer comprises at least one of: sodium carboxymethyl cellulose; and, styrene-butadiene rubber.

In some examples, forming an electrode from the at least partially covered collector further comprises: warming the at least partially covered collector in a drying arrangement; and, rolling the dried at least partially covered collector into a roll.

In some examples, providing a solution comprises: agitating the solution; and, stirring the solution at or below a predetermined temperature.

In some examples, agitating the solution comprises agitating the solution in ultrasound waves for around 5 hours with ultrasound waves of power around 200 to around 250 W with an amplitude of around 80 to around 90%.

In some examples, the predetermined temperature is around 100 °C.

In some examples, the method is performed at a large scale. Specifically, the presently disclosed method is able to provide an amount of electrode per unit time of around 600 cm²/min or around 0.06 m²/min.

In accordance with some embodiments described herein, there is provided a.

In some examples, method of providing a solution for producing electrodes, comprising: providing an active material with a predetermined surface area and particle diameter; providing water as a solvent; providing a conductivity-enhancing additive; providing at least one water soluble polymer; combining the active material, water, conductivity-enhancing additive and at least one water soluble polymer into a solution; submitting the solution to ultrasound; and, combining the solution with a second solution of water and styrene-butadiene rubber; increasing the viscosity via heating to form a slurry; and coating the slurry onto a current collector.

In some examples, the active material is graphene with a surface area of around 120 to around 150 m²/g and particle diameter of around 2 to around 10 µm; the water is deionised water; the conductivity-enhancing additive comprises carbon black; and, the at least one water-soluble polymer comprises sodium carboxymethyl cellulose.

In accordance with some embodiments described herein, there is provided an electrode formed using any of the above method embodiments. In examples, the electrode may be an anode electrode.

This disclosure relates to graphene anode electrodes for high power battery cells. Without being restrictive, potential applications of the proposed anode electrode may be in lithium-ion batteries, or any other energy storage system in which a carbon-based electrode is used.

### Description of Drawings

The present teachings will now be described by way of example only with reference to the following figures:
Figure 1 is a view of a coating arrangement according to examples;
Figure 2 is a view of a drying arrangement according to examples;
Figure 3 is a view of a winding arrangement according to examples;
Figure 4 is a view of an end arrangement according to examples;
Figure 5 is a flow chart of a method according to examples;
Figure 6 is a flow chart of a method according to examples; and,
Figure 7 is a flow chart of a method according to examples.

While the disclosure is susceptible to various modifications and alternative forms, specific embodiments are shown by way of example in the drawings and are herein described in detail. It should be understood, however, that the drawings and detailed description of the specific embodiments are not intended to limit the disclosure to the particular forms disclosed. On the contrary, the disclosure covers all modifications, equivalents and alternatives falling within the scope of the present disclosure as defined by the appended claims.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

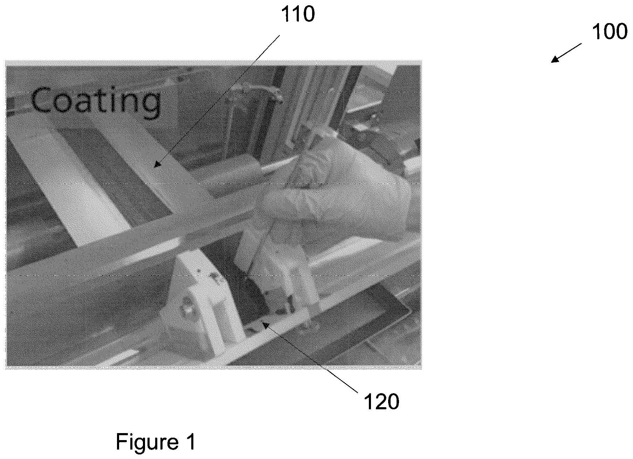

Referring now to Figure 1, there is shown a first portion of a method for providing an electrode. Figure 1 shows an arrangement 100 wherein a current collector receives a pre-prepared solution. The solution is disclosed below.

The arrangement 100 of Figure 1 shows a current collector 110 that may be a copper substrate. The current collector 110 may be any metallic or non-metallic substrates. We have found in particular that copper foil is effective by virtue of possessing high conductivity, being able to form oxidized protective film, possessing a soft texture which has been found to be favourable for bonding, having a mature manufacturing technology and accordingly a relatively low price. These characteristics can also be found in aluminium foil. As such, both aluminium foil and copper foil may be selected as the main material of lithium battery current collector. The pre-prepared solution is coated onto the current collector 110 using a roll-to-roll coating method.

More generally, properties that have been found to be advantageous are (a) high electrical and thermal conductivity (b) good flexibility (c) high compression strength (d) high thermal stability (e) thin and light in weight (f) low contact resistance with the electrode (g) high chemical and electrochemical stability (h) high corrosion resistive (i) environmental friendly, (j) low cost, etc. Materials satisfying these include copper foil and aluminium foil as noted above. These advantageously provide highly suitable current collectors for use the method disclosed herein.

In an example, the current collector is placed as a coil into the Roll to Roll machine. The collector may pass several modules including a coating module (where the collector is coated with a slurry, details provided below). The collector and slurry combination is then passed to heating modules (which may be ovens) where the slurry is heated and the combined element is then wound in a winding unit.

In examples, the solution is poured into a tank 120 which is used as a reservoir for the solution. The collector 110 may be moved relative to the tank 120. In a particularly effective arrangement, the collector 110 is passed under the reservoir at a speed of around 0.2 to around 0.6 m/min. The collector 110 is passed under the reservoir at a speed of around up to 4 m/min. In other examples, the collector 110 is passed under the reservoir at a speed of around 60 m/min and above. In this way, the collector 110 may be coated with the solution from the tank 120. The tank 120 may be a tank for containing solution. The tank 120 may be a tank for acting as a slurry reservoir. The tank 120 may be made of Polytetrafluoroethylene (PTFE) and placed onto the copper. The tank may additionally or alternatively be made of Polyoxymethylene (POM).

In examples, the substrate is delivered using a doctor blade and the height of delivery is adjustable (the tank outlet and the collector position may be moved relatively to one another). The method may be a tape casting method. The collector 110 may be coated in the solution contained within the tank. The delivery of the substrate onto the foil can be controlled using this method such that a desired thickness of substrate on the foil can be produced.

For the graphene-based electrode for LIB, the doctor blade may be used as a manufacturing technique for delivering the substrate. The present inventors have also developed a water-based graphene electrode for supercapacitors with a similar manufacturing process. In either process, instead of a doctor blade for providing control over the delivery of the substrate onto the foil, a slot die may be used. Rotary screen printing may also be used.

Slot die is an advantageous industrial method for use in the above process and use of a doctor blade may also or alternatively be used. Rotary screen printing is more often used for e.g. organic electronic circuit printing and so while this may be used in the method disclosed herein, the other two methods (slot die and doctor blade) may be slightly more suitable for the process discussed.

These methods help control the delivery of the slurry onto the foil current collector. By controlling this delivery, the thickness of the slurry on the collector can be controlled. In this way, the physical properties of the combination can be controlled such that a desired ratio is achieved for the total thickness of the product (post heating in ovens).

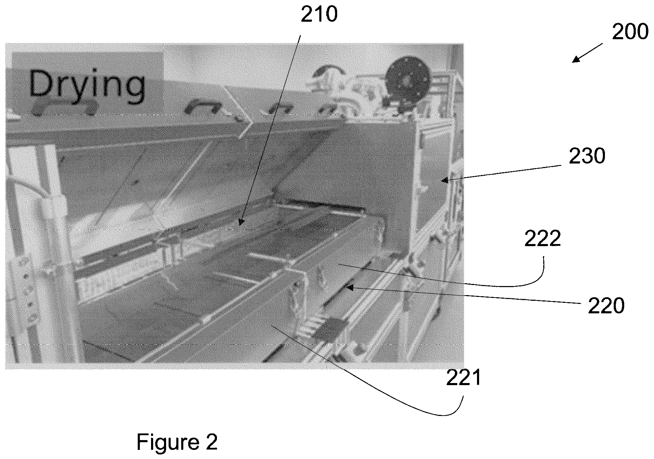

Referring now to Figure 2, there is shown an arrangement 200. The arrangement 200 may be a drying arrangement 200. The coated collecter from the arrangement of Figure 1 is provided to a drying arrangement 200 to provide thermal energy such that the solvent may be evaporated from the coated collector.

In the example shown in Figure 2, there is a collector 210 within a drying section 220. The drying section 220 has a variably controllable temperature. In examples, the drying sections used are controlled at temperatures from around 100 °C to around 150 °C. The drying sections may be controlled to operate at different temperatures or the same temperature. Air flow may be provided around 350 to around 500 m³/h. Once the coated collector passes the drying sections, it is rolled into a second roll (as per a roll-to-roll process).

The drying section 220 may include a first air dryer 221 and a second air dryer 222. The first 221 and second air dryers 222 may be around 1 m in length each. These sections 221, 222 can have either the same temperature, or different temperatures, depending on material, thickness, velocity of the roll to roll for electrode production. The second section is arranged to reduce the humidity even further. It may be advantageous that initially a lower temperature is used and the second has a higher temperature. This may provide a kind of temperature ramp and reduce thermal stress of the wet film, e.g. slower drying may reduce cracks and advantageously leads to a more homogeneous film.

In the example of Figure 2, there is also shown a further dryer. The further air dryer is shown by element 230. This further dryer may be an infrared dryer 230. The infrared dryer may comprise 2 sections where each is around 600 mm in length.

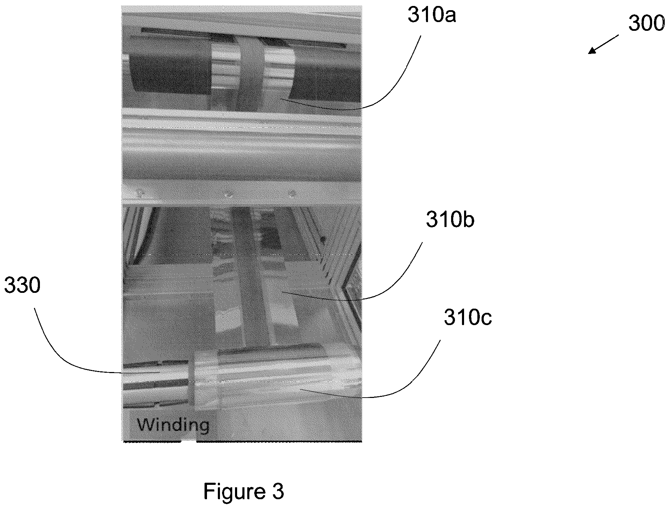

Referring now to Figure 3, there is shown an arrangement 300. The arrangement 300 may be a winding arrangement 300. In the winding arrangement 300, there is shown the coated collector 310a, 310b, 310c. The coated collector 310 can be seen to be pass to and be rolled around a bar 330. The bar 330 has a circular cross-section, though other shaped cross-sections are also envisaged. This is therefore an effective winding arrangement 300 where the coated collector 310 is itself collected into a rolled arrangement around bar 330.

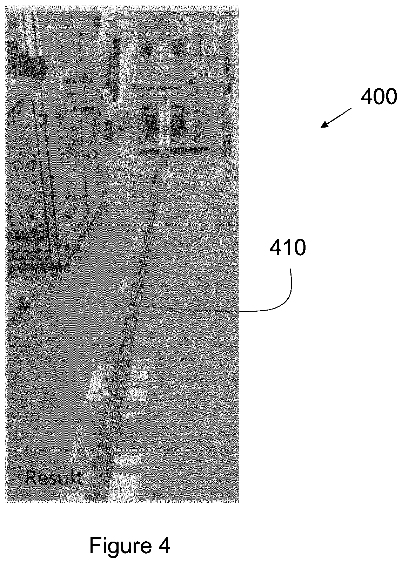

Referring now to Figure 4, there is shown an arrangement 400. In the arrangement 400 the coated collector 410 can be seen as a lengthy roll. The collector 410 (which may now be referred as an electrode) has been produced in a significant quantity. This is relevant as showing that the method herein is capable of producing an industrial quantity of the electrode and not merely providing a short supply of the highly effective and environmentally friendly electrode 410. Figure 4 shows the scaled up arrangement 400 that is feasible using the methods and processes disclosed herein.

In examples, the electrodes produced by the method described herein are anode electrodes. In examples, the electrodes produced by the method described herein are anode electrodes with graphene as the active material. In examples, the electrodes produced by the method described herein are anode electrodes with graphite as the active material.

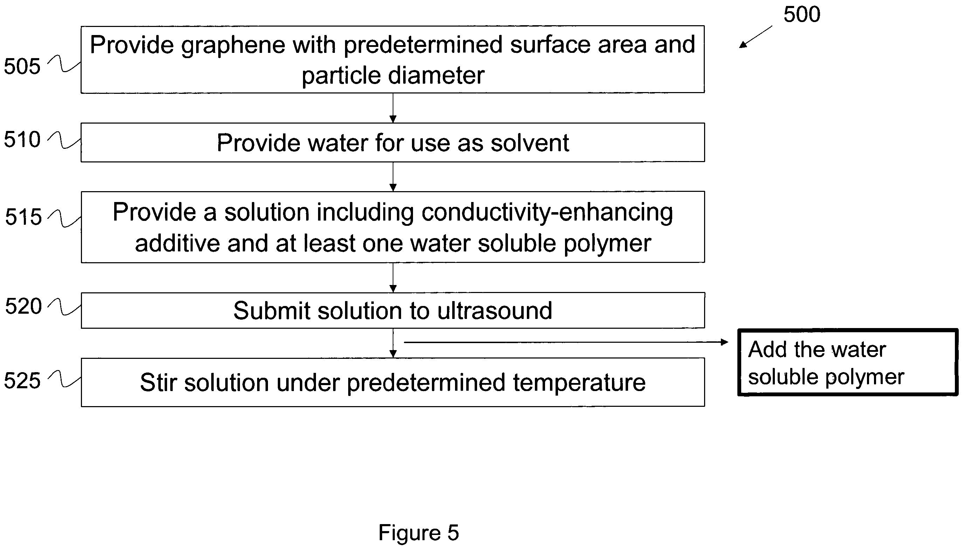

Referring now to Figure 5, there is shown a flow chart of a method 500. The method is for preparing solution for coating a current collector. The coated current collector is then used to provide anode electrodes for batteries that may be rechargeable and highly powerful.

In step 505, graphene is provided with predetermined surface area and particle diameter. In examples, we have found that surface areas of around 120 to around 150 m²/g is particularly effective. In examples, particle diameters of around 2 to 10 µm are used. These values combine to provide a particularly effective electrode performance once the method is carried out in full to provide an electrode.

During development, graphene products with surface areas of 80 to 1000 m²/g were investigated and tested in anode production. The present disclosure preferably uses graphene products with surface areas of 120 to 150 m²/g. In particular, the present disclosure preferably uses graphene products with surface areas of 120 to 150 m²/g for battery anodes and graphene products with surface areas of 700 to 800 m²/g for super-capacitor anodes.

In step 510, water is provided for use as solvent. In many modern methods, organic solvents such as Methyl-2-Pyrrolidone (NMP) and/or Dimethylformamide (DMF) are used. In the present process, neither of these are used. This alteration results in the overall cost for the process being significantly reduced (in terms of raw material) and the process is non-toxic. In specific examples, the cost may be reduced by up to around 500 times and the process is far less energy intensive. This value was calculated taking into account the prices of the products used for the organic slurry (NMP) and the aqueous based one (H2O). Energy savings occur in lower temperatures in the dryers alongside the solvent recovery processes. NMP is typically recovered e.g. by condensation, while water is safe to be released via exhausts.

In step 515, the solution is provided which includes a conductivity-enhancing additive and at least one water soluble polymer. In this way, the slurry or solution comprises the active material (e.g. graphene or graphite) and water (e.g. deionised water) alongside a conductivity-enhancing additive and a water soluble polymer. In examples, the conductivity-enhancing additive is carbon black. In examples, the conductivity-enhancing additive is carbon nanotubes (CNTs). In examples, the water-soluble polymer is sodium carboxymethyl cellulose (CMC) used in a first solution. In examples, the water-soluble polymer is styrene-butadiene rubber (SBR) used in a second solution. The water-soluble polymer is a binder in the process disclosed herein. Preferentially the binder used is natural. The binder is, or binders are, responsible for the adhesion of the solution to the current collector. In this way, the process of forming the electrode is further environmentally friendly.

In step 520, the solution is submitted to ultrasound. The solution may be placed in an ultrasound reactor or the like. For example, a controlled chamber wherein ultrasound can be provided to the solution. The ultrasound waves provided to the solution may have a power of 200-250W and an amplitude of about 80-90%. The solution may be subjected to the ultrasound waves for a duration in the region of hours. In examples, the solution is subjected to ultrasound for around five hours. The solution, during this step, forms an increasingly homogeneous solution. Furthermore, this step assists reduction of graphene (or graphite) agglomerates. In examples, the flow of the ultrasound reactor is set between around 600 to around 1000 ml/min and the pressure of the ultrasonic cell is below around 3 bar.

The terms "solution" and "slurry" may be used interchangeably herein. In practice, the terms differ by "slurry" referring to a solution containing the relevant solids having reached a suitable viscosity (suitable for using in a coating process ).

In step 525, the solution is stirred. The stirring occurs under a predetermined temperature. In examples, the stirring occurs at a temperature below around 100 °C. The stirring provides a viscosity in the solution that is highly suitable and advantageous for coating. The disclosure herein has found a viscosity of between around 100 to 1000 mPa.s to be particularly advantageous. Coating at higher shear rates can be achieved using both techniques. These viscosities can be controlled via use of dryers and evaporation of the water component of the solution.

The method 500 of Figure 5 therefore provides a highly advantageous and effective solution for use in the provision of electrodes. In particular, the method provides a solution that is highly environmentally friendly and of a much reduced cost in comparison to modern methods.

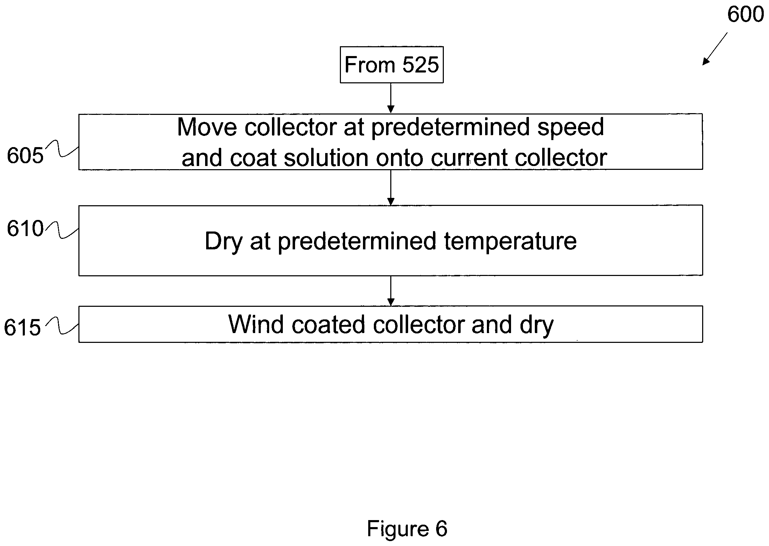

Referring now to Figure 6, there is shown a flow chart of a method 600. The method is for providing an electrode. The method 600 uses a slurry as described above. In an example, the method 600 starts with a user having produced a slurry according to method 500. In this way, in the specific example of Figure 6, the method 600 beings from step 525 of Figure 5. While the method of Figure 5 discusses a solution, we then refer to the method of Figure 6 using a slurry.

In step 605, the collector may be moved at a predetermined speed in a direction that provides relative movement between the tank (or reservoir or the like) and the collector. In this way, a controlled delivery of solution onto the collector can be provided. The controlled delivery impacts and, when controlled, improves the layer of the coating of solution onto the collected. The faster the movement of the collector, the less homogenous the solution is unless the flow rate of the solution from the tank is further increased. t increased flow rates, however, increased likelihood of lower homogeneity in solution layer thickness on the collector. In examples, it has been found, that between around 0.2 to around 0.6 m/min is a suitable speed.

Also in step 605, the current collector is coated with the pre-prepared slurry (from method 500). This may occur, as described above (with reference to Figure 1), by containing the solution in a tank or reservoir and moving the reservoir and collector relative to one another. In examples, the current collector moves underneath the static reservoir and doctor blade setup. The solution within the reservoir can be provided onto the collector and at least a portion of the collector may be covered or coated in the solution. It is also possible to coat homogeneous film with doctor blade at higher movement velocities.

In step 610, the coated collector is then dried at a predetermined temperature. Specifically, the at least partially coated collector is passed to at least one drying section (such as shown in Figure 2). The coated collector is dried to remove solvent. This may occur at temperatures between 100 to 150 °C with an air flow between around 350 to 500 m³/h.

In step 615, the dried coated collector is winded. In winding and subsequently drying the collector, the electrode is produced and is available for further use. The further use may involve deconstruction from the winding and being used in batteries.

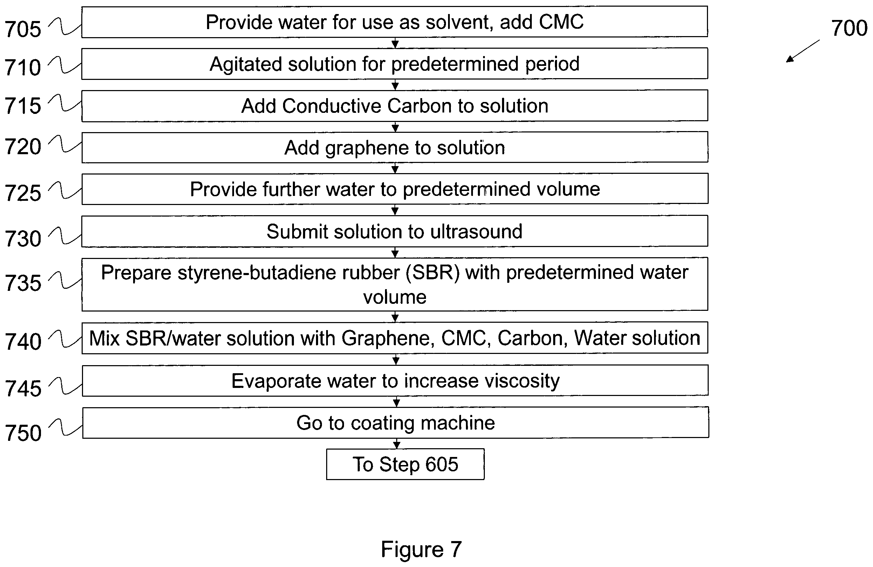

Referring now to Figure 7, there is shown a method 7 according to the present disclosure. Method 700 includes ten steps, 705, 710, 715, 720, 725, 730, 735, 740, 745, 750.

In a first step 705, water is provided as a solvent for use in the process. As noted above, this has significant cost and energy savings alongside being more environmentally friendly. Added to the water in step 705 is a water-soluble polymer sodium carboxymethyl cellulose (CMC).

In a second step 710, the solution is agitated for a predetermined period of time. Specifically, it has been found that agitating the solution overnight is advantageous for homogeneity of the solution. The solution may be stirred.

In a third step 715, conductive carbon is added to the solution. In a fourth step 720, graphene is added to the solution. In a fifth step 725, further water is added to the solution. A predetermined volume of water is added such that the solution achieves a predetermined value of around 5 litres. In a specific example, the ratio is around 5 litres total solution for batches of around 100 grams of graphene. It is advantageous to use a reasonable amount of liquid to allow for improved sonication and agitation.

In a sixth step 730, the solution is submitted to ultrasound agitation. This step improves the homogeneity of the solution. The present inventors have revealed that graphene flakes tend to form agglomerations in this process. Agglomeration of the dispersed nanoparticles can lead to declined conductivity and viscosity. For improved dispersion and break down of the clusters, the present ultrasonication method is a highly advantageous approach. The present inventors have found that use of waves in the frequencies of around 20 kHz are particularly advantageous. A range of around 15 kHz to around 25 kHz may be used.

In a further step 735, SBR is prepared with a predetermined water volume. The SBR solution has SBR content by weight of around 15%. This has been found to be highly advantageous in the presently disclosed process.

In a further step 740, the solution from step 735 is combined with the solution from step 725.

In a further step 745, water is evaporated from the combined solutions. This increases the viscosity of the solution. This may be considered a further step in which the "solution" is changed into a "slurry". The viscosity is chosen such that there can be effective and efficient coating of the slurry onto the current collector. The disclosure herein has found a viscosity of between around 100 to 1000 mPa.s to be particularly advantageous. This can be achieved by carefully controlled evaporation.

In a further step 750, the process moves to a coating machine wherein the slurry will be coated onto the current carrier. This portion of the process is shown in Figure 1. Noting that Figure 1 shows an arrangement 100 wherein a current collector receives a pre-prepared solution, the method of Figure 7 teaches the preparation of the solution for use in the arrangement of Figure 1.

We note that, in further detail to the above, following the sonication of the first solution, the second polymer is added. The second polymer is added as a solution of SBR in water. The solution of SBR is added to the first solution which includes the active material and the conductive additive and is then placed for evaporation. The second polymer is used as a binder for the adhesion of the coating to the current collector.

Electrodes produced via this method have high electrical performance. The performance of electrodes formed via this method was characterised. The characterization of the electrodes revealed that a measured capacity of a graphite electrode was about 200 mAh/g at 1C-Rate, and a graphene-based electrode showed a capacity of about 270 mAh/g at 1C-Rate.

As such, highly effective anode electrodes can be provided via this method that are cheaper and more environmentally friendly than previously known.

Graphene used herein as an active material provides better performance and stability to the formed electrode, with a longer life cycle. In addition, the use of water and water-soluble binders provides an environmentally friendly character to the material, as well as a reduction in manufacturing costs. Finally, the fabrication of the electrode by a roll-to-roll coating method enables the industrialization of the electrode with the ultimate goal of developing a widely commercially available electrode for a lithium-ion battery.

The present system has also been shown to be advantageous in the production of graphene based electrode for super-capacitors. As noted above, graphene products with surface areas of 700 to 800 m²/g for super-capacitor anodes have been developed as particularly effective.

Therefore, the disclosure herein provides a development of batteries with higher performance, lower cost and from a more environmentally friendly technology than is presently used. Furthermore, the above disclosure addresses the lack of commercially available industrial-scale graphene electrode and so a graphene anode electrode is taught above using water as a solvent and water-soluble polymer as binders.

The above disclosure is therefore a significant improvement over previously known systems. Specifically, the overall cost for the process may be reduced (in terms of raw material) by up to around 500 times and the process is non-toxic and less energy intensive.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the disclosure as defined by the claims or limitations on equivalents to the claims, and that other embodiments may be utilised and modifications may be made without departing from the scope of the claimed disclosure. Various embodiments of the present disclosure may suitably comprise, consist of, or consist essentially of, appropriate combinations of the disclosed elements, components, features, parts, steps, means, etc, other than those specifically described herein. In addition, this disclosure may include other examples not presently claimed, but which may be claimed in future.

## Claims

1. A method of providing an anode electrode comprising:
providing a solution comprising:
an active material;
a solvent wherein the solvent is water;
a conductivity-enhancing additive; and,
at least one water soluble polymer;
providing a collector;
at least partially covering the collector in the solution; and,
forming an electrode from the at least partially covered collector.

2. A method according to claim 1, wherein the water is substantially deionised water.

3. A method according to claim 1 or 2, wherein the active material comprises at least one of graphene and graphite.

4. A method according to any preceding claim, wherein the collector is at least partially formed of a metallic material.

5. A method according to any preceding claim, wherein the collector is at least partially formed of copper.

6. A method according to any preceding claim, wherein the conductivity-enhancing additive comprises carbon black.

7. A method according to any preceding claim, wherein the at least one water-soluble polymer comprises at least one of:
sodium carboxymethyl cellulose; and,
styrene-butadiene rubber.

8. A method according to any preceding claim, wherein forming an electrode from the at least partially covered collector further comprises:
warming the at least partially covered collector in a drying arrangement; and,
rolling the dried at least partially covered collector into a roll.

9. A method according to any preceding claim, wherein providing a solution comprises:
agitating the solution; and,
stirring the solution at or below a predetermined temperature.

10. A method according to claim 9, wherein
agitating the solution comprises agitating the solution in ultrasound waves for between around 20 minutes to around 5 hours with ultrasound waves of power around 200 to around 250 W with an amplitude of around 80 to around 90%.

11. A method according to claim 9 or 10, wherein the predetermined temperature is around 100 °C.

12. A method according to any preceding claim, wherein the method is performed at a large scale.

13. A method of providing a solution for producing electrodes, comprising:
providing an active material with a predetermined surface area and particle diameter;
providing water as a solvent;
providing a conductivity-enhancing additive;
providing at least one water soluble polymer;
combining the active material, water, conductivity-enhancing additive and at least one water soluble polymer into a solution;
submitting the solution to ultrasound; and,
combining the solution with a second solution of water and styrene-butadiene rubber;
increasing the viscosity via heating to form a slurry; and
coating the slurry onto a current collector.

14. A method according to claim 13, wherein
the active material is graphene with a surface area of around 120 to around 150 m²/g and particle diameter of around 2 to around 10 µm;
the water is deionised water;
the conductivity-enhancing additive comprises carbon black; and,
the at least one water-soluble polymer comprises sodium carboxymethyl cellulose.

15. An electrode formed by using of the methods of claims 1 to 14.
